Europäisches Patentamt

(19) European Patent Office    (11) Numéro de publication:    **0 193 514**

Office européen des brevets    **B1**

(12)    **FASCICULE DE BREVET EUROPEEN**

(45) Date de publication du fascicule du brevet: **08.08.90**    (51) Int. Cl.⁵: **A 61 C 13/20, C 08 F 2/00**

(21) Numéro de dépôt: **86870011.3**

(22) Date de dépôt: **28.01.86**

(54) **Procédé de polymérisation de résines et installation pour la mise en oeuvre de ce procédé.**

(30) Priorité: **29.01.85 BE 214415**

(43) Date de publication de la demande:
**03.09.86 Bulletin 86/36**

(45) Mention de la délivrance du brevet:
**08.08.90 Bulletin 90/32**

(84) Etats contractants désignés:
**DE FR GB IT**

(56) Documents cités:
**EP-A-0 089 705    FR-A-2 373 765**
**BE-A- 888 109    FR-A-2 386 957**
**FR-A-2 280 358**

**J.Osaka Dental University, Vol. 2, No. 1, p. 23 to 40, 1968 "Studies on the Curing of Denture Base Resins with Microwave Irradiation.: With particular Reference to heat-curing resins"**
**J. Osaka Univ. Dent. Sch., Vol. 24, p. 21 to 29, 1984 "Applications for Microwave Dental Technique (part 2) - Adaptability of cured Resins ."**

(73) Titulaire: **De Clerck, Jean-Paul Henri**
**Boulevard de Smet de Naeyer, 277**
**Jette 1090 Bruxelles (BE)**

(72) Inventeur: **De Clerck, Jean-Paul Henri**
**Boulevard de Smet de Naeyer, 277**
**Jette 1090 Bruxelles (BE)**

(74) Mandataire: **Vigneron, Jean**
**Cabinet VIGNERON 30 avenue Eugène Godaux**
**B-1150 Bruxelles (BE)**

Courier Press, Leamington Spa, England.

## Description

L'invention a pour objet un procédé de polymérisation de résines dans un moule, notamment dans un mouffle pour la fabrication de prothèse dentaires, soumis à des micro-ondes engendrées par au moins un magnétron et dirigées par au moins un guide d'ondes se terminant par une antenne à surface rayonnante.

On connaît actuellement un procédé de polymérisation de résines suivant lequel on utilise des moules métalliques que l'on soumet, dans un four, à des micro-ondes, ces moules étant percés d'ouvertures permettant le rayonnement des micro-ondes à l'intérieur des moules.

Ce procédé connu présente plusieurs inconvénients dont les principaux sont, d'une part, le mauvais rendement du magnétron puisqu'une partie importante des micro-ondes émises sont réfléchies par les parois métalliques des moules et, d'autre part, la difficulté de bien localiser, répartir et choisir les dimensions des ouvertures pour obtenir un échauffement homogène du contenu des moules, ces ouvertures variant en outre en fonction des quantités ou natures des résines à polymériser.

Pour remédier à ces inconvénients, on a déjà pensé utiliser des moules à parois pleines, transparentes ou non aux micro-ondes, comme cela résulte notamment de la demande de brevet européen publiée no 0.089705 qui prévoit, pour la fabrication par moulage de lentilles de contact, un moule à parois pleines transparent aux micro-ondes, ainsi que de la demande de brevet français publiée no 2.386957 qui prévoit, dans un moule à parois pleines constitué d'un élément céramique enfermé dans un élément métallique, une cavité alimentée par énergie à micro-ondes pour y produire deux modes de résonnance différents choisis pour que la densité de champ électrique soit différente de zéro à l'intérieur de tout le volume de la cavité.

L'invention concerne un procédé mettant en oeuvre un mouffle à parois pleines, ce procédé permettant l'utilisation d'un seul moule, de construction plus simple que celle des moules connus, pouvant assurer un échauffement homogène des résines à polymériser, quels que soient les objets à mouler ainsi que la quantité et la nature de la résine utilisée.

A cet effet, suivant l'invention, on utilise un mouffle à parois pleines réalisé soit en un matériau pouvant être traversé par les micro-ondes avec l'antenne à surface rayonnante disposée à l'extérieur du moule, soit en un matériau réfléchissant les micro-ondes, avec l'antenne à surface rayonnante disposée à l'intérieur du moule, on dispose la maquette en cire placée sur son plâtre dans le mouffle et on immobilise cette dernière à l'aide d'une masse de mise en mouffle qui peut être traversée par les micro-ondes, qui présente une bonne conductibilité thermique, ainsi qu'une finesse de grain et une résistance mécanique convenable, on laisse durcir ladite masse, on soumet le mouffle aux micro-ondes, on ouvre le mouffle, on débarrasse la masse de mise en mouffle de la cire fondue, on éblouillante le plâtre de la maquette et la masse de mise en mouffle, on soumet le mouffle ouvert aux micro-ondes pour sècher son contenu, on laisse refroidir le mouffle, on enduit les parois de la cavité à bourrer de résine d'une matière empêchant cette dernière d'adhérer au plâtre et à la masse de mise en mouffle, on bourre cette cavité de résine préparée, on ferme le mouffle, on le soumet aux micro-ondes, on laisse alors refroidir le mouffle et on démouffle la prothèse.

Suivant une forme de réalisation avantageuse de l'invention, on asservit le magnétron aux informations procurées par une sonde thermique logée dans une masse de résine de référence qui est localisée, d'un part, soit à l'intérieur du mouffle, soit à l'extérieur de celui-ci, lorsque les parois dudit moule sont réalisées en un matériau pouvant être traversé par les micro-ondes, et d'autre, à l'intérieur du mouffle quand les parois de celui-ci sont réalisées en un matériau réfléchissant les micro-ondes.

L'invention a également pour objet une installation pour la mise en oeuvre du procédé susdit.

D'autres détails et particularités de l'invention ressortiront de la description des dessins annexés au présent mémoire et qui illustrent, à titre d'exemples non limitatifs, des formes de réalisations particulières de l'objet de l'invention.

La figure 1 est une vue schématique, en élévation et partiellement en coupe, illustrant le procédé et l'installation suivant l'invention.

Les figures 2 et 3 sont des vues analogues à la figure 1 et illustrent des variantes du procédé et de l'installation montrés à ladite figure 1.

La figure 4 est une vue en perspective montrant les éléments constituant un mouffle suivant l'invention, ces éléments étant représentés non assemblés.

La figure 5 est une vue en coupe du mouffle illustré à la figure 4, les éléments qui le constituent étant assemblés.

Dans les différentes figures, les mêmes notations de référence désignent des éléments identiques ou analogues.

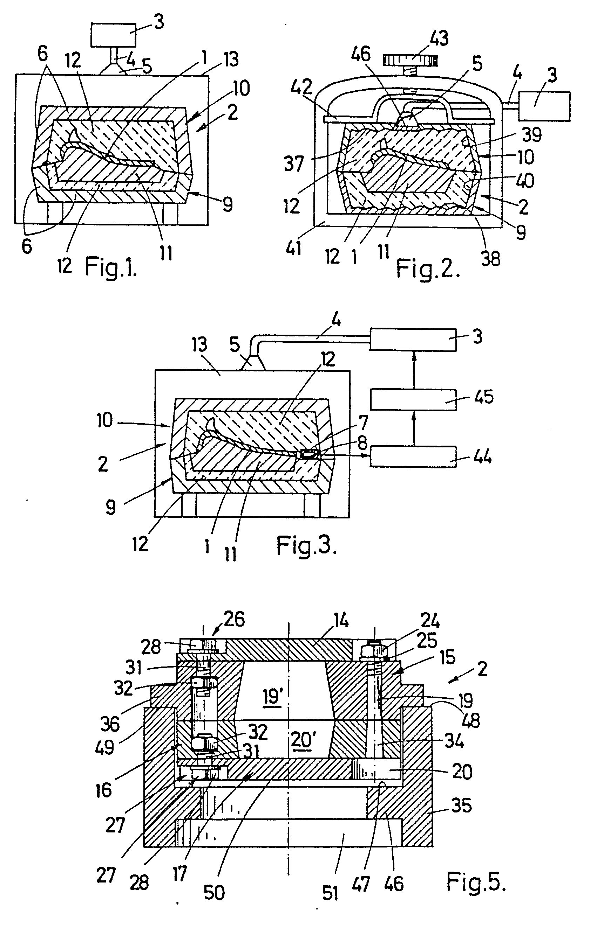

Le procédé suivant l'invention et illustré aux dessins est destiné à la polymérisation de résines 1 dans un moule 2, notamment dans un mouffle pour la fabrication de prothèses dentaires, soumis à des micro-ondes engendrées par un magnétron 3 et dirigées par un guide d'ondes 4 se terminant par une antenne à surface rayonnante 5. Suivant ce procédé, on utilise des moules 2 dont les parois 6 sont pleines. Ces parois sont soit, comme montré à la figure 1, réalisées en un matériau pouvant être traversé par les micro-ondes, l'antenne à surface rayonnante 5 étant alors disposée à l'extérieur du moule, soit comme montré à la figure 2, réalisées en un matériau réfléchissant les micro-ondes, l'antenne 5 étant, dans ce cas, disposée dans le moule 2.

Etant donné que la température obtenue dans la résine à polymériser est influencée par des paramètres tels que poids de résine mise à polymériser, conductibilité thermique des matériaux séparant la résine du milieu extérieur et, dans le cas où le moule est soumis aux micro-ondes à l'intérieur du four, masse d'eau de protection introduite dans le four, pour éviter des surchauffes ainsi que débit du ventilateur du four, le procédé suivant l'invention prévoit d'asservir le magnétron 3 pour tenir compte de ces paramètres. Cet asservissement est obtenu en disposant à l'intérieur du moule une masse de résine de référence 7, en plaçant dans cette masse une sonde thermique 8 (voir figure 3) qui transmet des informations auxquelles répond le magnétron 3. Dans le cas où un asservissement moins précis est suffisant, et que l'antenne à surface rayonnante 5 est située en déhors du moule 2, la masse de résine de référence 7 et la sonde 8 qui y est noyée peuvent être placées à l'extérieur du moule. Cette façon de faire permet de simplifier la fabrication et l'utilisation dudit moule, car il ne faut pas y prévoir d'ouverture pour le passage des connexions électriques, ni le logement de la masse 7 dans la masse de mise en mouffle 12.

Pour éviter des concentrations localisées et fixes d'ondes stationnaires dans le moule, on module avantageusement la fréquence des micro-ondes.

Lorsque la polymérisation de résine s'effectue dans le but d'obtenir des prothèses dentaires, on utilise un mouffle 2, réalisé par exemple, comme montré aux figures 1 à 3, en deux pièces creuses 9 et 10. On dispose dans la pièce 9 la maquette en cire de la prothèse placée sur son plâtre 11 et on l'immobilise à l'aide d'une masse de mise en mouffle 12 disposée dans les pièces 9 et 10 et qui peut être traversée par les micro-ondes, qui présente une bonne conductibilité thermique permettant la dissipation de la chaleur engendrée par la réaction exothermique qu'est la polymérisation et ce, afin d'éviter l'ébullition locale du monomère de la résine qui rendrait porteuse la masse de résine polymérisée, tout en ayant une finesse de grain et une résistance mécanique convenables. Après avoir laissé cette masse 12 durcir, on soumet le mouffle 2 aux micro-ondes pendant un temps suffisant pour faire fondre la cire de la maquette. On ouvre alors le mouffle et on débarasse la masse 12 de la cire fondue, cette masse étant ébouillantée ainsi que le plâtre 11 de la maquette. Pour éviter que de l'eau présente dans le plâtre et dans la masse 12 augmente, en cours de polymérisation et sous l'action des micro-ondes, leur température, il est important de sècher ce plâtre et cette masse par exemple en soumettant le mouffle ouvert aux micro-ondes.

Afin de réduire le volume du plâtre de mise en mouffle et par là même éviter les inconvénients inhérents aux volumes importants de plâtre, il est intéressant d'utiliser un élément, réalisé en un matériau bon conducteur thermique pouvant être traversé par les micro-ondes, prenant dans le mouffle une partie de la place normalement prise par la masse de mise en mouffle 12.

Après séchage et refroidissement du mouffle, les parois de la cavité, formée par la fonte de la cire de la maquette, sont enduites d'une matière pouvant être traversée par les micro-ondes empêchant la résine d'adhérer au plâtre 11 et à la masse 12. On bourre ou on injecté ensuite dans cette cavité de la résine 1 préparée, on ferme le mouffle pour le soumettre aux micro-ondes et on démouffle enfin la prothèse après refroidissement dudit mouffle. Dans le cas où la masse de résine de référence 7 est logée à l'intérieur du mouffle, on prévoit un logement pour cette masse 7 dans la masse de mise en mouffle 12, ce logement étant situé le plus près possible de la cavité précitée dans laquelle est bourrée la résine.

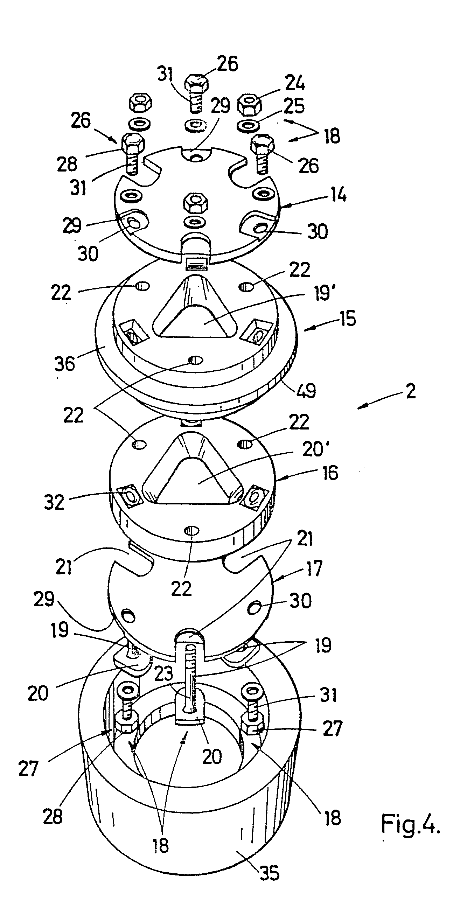

L'installation pour la mise en oeuvre du procédé susdit comprend, comme montré aux figures 1 et 3, un four à micro-ondes 13 et un moule ou mouffle 2 dont les parois peuvent être traversées par les micro-ondes générées par le magnétron 3 du four. Ce moule ou mouffle 2 est avantageusement constitué, comme montré aux figures 4 et 5, de quatre pièces 14, 15, 16 et 17 à parois pleines, les pièces 14 et 17, qui sont identiques et donc inter changeables, constituant les deux couvercles inférieur et supérieur du mouffle tandis que les pièces 15 et 16, qui sont creuses et superposables constituent les parois latérales du mouffle, des moyens 18 étant prévus pour réaliser l'assemblage des quatre pièces susdites. Celles-ci sont en forme de disques de diamètres sensiblement égaux, les disques constituant les pièces 15 et 16 étant évidés dans leur partie centrale afin de former des logements 19' et 20', en forme de troncs de pyramide, qui communiquent entre eux, lorsque les pièces 15 et 16 sont superposées, par leur grande base. Les moyens d'assemblage 18 sont constitués, d'une part, par trois boulons 19, décalés de 120° l'un par rapport à l'autre, dont les têtes 20 s'engagent dans des évidements correspondants 21 réalisés à la périphérie et sur toute l'épaisseur des pièces 14 et 17 interchangeables, des ouvertures 22 étant prévues dans les pièces 15 et 16 pour livrer passage aux tiges 23 des boulons 19, le serrage des deux pièces 15 et 16 l'une sur l'autre étant assuré par les écrous 24 et rondelles 25 des boulons et, d'autre part, par deux séries de trois boulons 26 et 27 décalés de 120° l'un par rapport à l'autre et de 60° par rapport aux boulons 19. Les têtes 28 des boulons 26 et 27 sont logées dans des évidements 29 réalisés à la périphérie des pièces 14 et 17 sur une partie de l'épaisseur de ces dernières. Ces pièces 14 et 17 présentent des ouvertures 30 pour le passage des tiges 31 des boulons 26 et 27 tandis que les pièces 15 et 16 présentent respectivement les écrous 32 qui y sont noyés, les boulons 26 permettant donc de fixer la pièce 14 à la pièce 15 tandis que les boulons 27 assurent l'assemblage de la pièce 17 à la pièce 16.

Pour faciliter l'alignement des pièces 15 et 16, les portions 34 des tiges 23 des boulons 19 ainsi que les ouvertures 22 réalisées dans la pièce 16 sont avantageusement coniques.

Pour éviter les arcs électriques entre les parois du four et les parties métalliques (boulons) du mouffle, l'installation comprend un support 35 de mouffle qui est constitué par un cylindre creux, réalisé en un matériau se laissant traverser par les micro-ondes, dont le diamètre interne est légèrement supérieur au diamètre des pièces 15 et 16, la pièce 15 présentant une saillie annulaire 36 limitant le déplacement du mouffle 2 à l'intérieur du support 35.

Ce support 35 présente également une saillie annulaire interne 46. La distance qui sépare la face 47 de cette saillie 46 de la face 48 du support 35 est supérieure à la distance séparant la face 49 de la saillie 36 susdite de la face 50 du couvercle 17 du mouffle, ce qui permet, lors du démoulage, après avoir enlevé le couvercle 14 et exercé une pression sur la masse de mise en mouffle, de retenir dans le support 35 l'ensemble constitué par la partie 16 du mouffle, le couvercle 15 et toute la masse de mise en mouffle. Après enlèvement de la partie 15 du mouffle, on tourne le support 35 pour que sa cavité 51 soit tournée vers le haut, on dépose dans le support l'ensemble susdit pour que le couvercle 17 soit dirigé vers le haut, on enlève ce couvercle et on chasse alors la masse de mise en mouffle qui tombe à l'intérieur du support.

L'installation suivant l'invention et illustrée à la figure 2 comprend un moule ou mouffle 2 constitué par exemple des deux pièces 9 et 10 susdites qui sont réalisées en un matériau réfléchissant les micro-ondes émises par un magnétron 3 extérieur au mouffle et dont l'antenne à surface rayonnante 5 est fixée à la pièce 9 ou 10 et reliée au magnétron par le guide d'ondes 4. Cette installation présente l'avantage de pouvoir connecter plusieurs mouffles au même magnétron à l'aide d'autant de guides d'ondes 4 qu'il y a de mouffles. Les parois internes 37 et 38 du mouffle présentent avantageusement des facettes orientées pour réfléchir les micro-ondes dans toutes les directions, tandis que les parois internes 39 et 40 sont lisses pour permettre le dégagement aisé de la masse de mise en mouffle 12. L'ouverture de l'antenne à surface rayonnante 5 est obturée, pour empêcher que la masse de mise en mouffle y pénètre, par une couche de matériau 46 laissant passer les micro-ondes. L'assemblage des pièces 9 et 10 est réalisé grâce à une bride 41, un ressort de bride 42 et une vis de pression 43.

Pour l'asservissement du magnétron aux informations fournies par la sonde 8 susdite, l'installation comprend, comme montré à la figure 3, un amplificateur 44 des signaux émis par la sonde et un processeur 45 de régulation du magnétron.

Il doit être entendu que l'invention n'est nullement limitée aux formes de réalisation décrites et que bien des modifications peuvent être apportées à ces dernières dans le cadre des revendications adjointes.

On pourrait notamment disposer directement, c'est-à-dire sans faire appel à une masse de résine de référence 7, la sonde thermique 8 soit à l'intérieur du mouffle, soit à l'extérieur de ce dernier.

## Revendications

1. Procédé de polymérisation de résines (1) dans un moule (2), notamment dans un mouffle (2) pour la fabrication de prothèses dentaires, soumis à des micro-ondes engendrées par au moins un magnétron (3) et dirigées par au moins un guide d'ondes (4) se terminant par une antenne à surface rayonnante (5), utilisant un mouffle (2) à parois pleines réalisé soit en un matériau pouvant être traversé par les micro-ondes avec l'antenne à surface rayonnante (4) disposée à l'extérieur du moule, soit en un matériau réfléchissant micro-ondes, avec l'antenne à surface rayonnante (4) disposée à l'intérieur du moule, ledit procédé comprenant les étapes suivantes: on dispose la maquette en cire placée sur son plâtre (11) dans le mouffle (2) et on immobilise cette dernière à l'aide d'une masse de mise en mouffle (12) qui peut être traversée par les micro-ondes, qui présente une bonne conductibilité thermique, ainsi qu'une finesse de grain et une résistance mécanique convenable, on laisse durcir ladite masse (12), on soumet le mouffle (2) aux micro-ondes, on ouvre le mouffle, on débarrasse la masse de mise en mouffle (12) de la cire fondue, on ébouillante le plâtre (11) de la maquette et la masse de mise en mouffle (12), on soumet le mouffle (2) ouvert aux micro-ondes pour sècher son contenu, on laisse refroidir le mouffle, on enduit les parois de la cavité à bourrer de résine d'une matière empêchant cette dernière d'adhérer au plâtre (11) et à la masse de mise en mouffle (12), on bourre cette cavité de résine (1) préparée, on ferme le mouffle, on le soumet aux micro-ondes, on laisse alors refroidir le mouffle et on démouffle la prothèse.

2. Procédé suivant la revendication 1, caractérisé en ce qu'on dispose soit à l'extérieur, soit à l'intérieur du mouffle (2) de manière à ce qu'elle soit soumise aux micro-ondes, une sonde thermique (8) et on asservit le magnétron (3) aux informations procurées par la sonde.

3. Procédé suivant la revendication 2, caractérisé en ce qu'on place la sonde thermique (8) dans une masse de résine de référence (7).

4. Procédé suivant la revendication 3, caractérisé en ce qu'on prévoit, dans la masse de mise en mouffle (12), un logement pour recevoir la masse de résine (7) de référence thermique, on dispose cette masse dans son logement en même temps que l'on bourre la cavité susdite de résine préparée (1) et on immobilise la sonde thermique (8) dans ladite masse de résine de référence (7).

5. Procédé suivant l'une quelconque des revendications 1 à 4, caractérisé en ce qu'on module la fréquence des micro-ondes pour éviter les concentrations localisées et fixes d'ondes stationnaires dans le moule.

6. Installation pour la mise en oeuvre du procédé suivant l'une quelconque des revendications 1 à 5, et comprenant au moins un moule ou mouffle (2), au moins un magnétron (3) et au moins un guide d'ondes (4) se terminant par une antenne à surface rayonnante (5), caractérisée en ce que le moule ou mouffle (2) est constitué de quatre pièces (14, 15, 16 et 17) à parois pleines, deux couvercles inférieur et supérieur (14 et 17) et deux éléments creux (15 et 16) superposables constituant les parois latérales du mouffle, des moyens (18) étant prévus pour l'assemblage de ces quatre pièces.

7. Installation suivant la revendication 6, caractérisée en ce que les quatre pièces (14, 15, 16 et 17) sont en forme de disques de diamètre sensiblement égaux, les disques constituant les deux éléments superposables (15 et 16) étant évidés dans leur partie centrale, afin de former des logements (19' et 20') en forme de troncs de pyramide, les moyens d'assemblages (18) comprenant au moins trois boulons (19) dont les tiges s'engagent dans des ouvertures ménagées à travers les disques parallèlement à leur axe et décalées de 120° l'une par rapport à l'autre, ces quatre pièces étant réalisées en un matériau tel que résine synthétique, céramique, verre à haute résistance, pouvant être traversé par les micro-ondes, le mouffle (2) obtenu à partir desdites quatre pièces étant destiné à être utilisé dans une enceinte à parois réfléchissantes, dans laquelle est située au moins une antenne à surface rayonnante (5).

8. Installation suivant la revendication 7, caractérisée en ce qu'elle comprend un support (35) de mouffle destiné à écarter les parties métalliques de ce dernier des parois réfléchissantes susdites, ce support étant constitué par un cylindre creux dont le diamètre interne est légèrement supérieur au diamètre des disques, des moyens (36) étant prévus pour limiter le déplacement du mouffle à l'intérieur du support.

9. Installation suivant la revendication 6, caractérisée en ce que les quatre pièces (14, 15, 16 et 17) sont réalisées en un matériau réfléchissant les micro-ondes, les pièces (14 et 17) formant les couvercles ayant leur face, destinée à être tournées vers l'intérieur du mouffle, qui présente des facettes orientées pour réfléchir les micro-ondes dans toutes les directions, au moins un des couvercles (14, 17) comportant au moins une antenne à surface rayonnante (5) au niveau de la face destinée à être tournée vers l'intérieur du mouffle, les deux éléments superposables (15 et 16) présentant chacun un évidement (19', 20') à paroi interne lisse.

10. Installation suivant l'une quelconque des revendications 6 à 9, caractérisée en ce qu'elle comprend au moins une sonde thermique (8) et un système d'asservissement du magnétron aux informations fournies par la sonde, ledit système comprenant un processeur de régulation, avec éventuellement un amplificateur (44) des signaux émis par la sonde du magnétron (3).

11. Installation suivant la revendication 10, caractérisée en ce que, lorsque la sonde thermique (8) est située à l'intérieur du mouffle (2), une des pièces (14, 15, 16, 17) présente une ouverture destinée à livrer passage aux connections de la sonde.

**Patentansprüche**

1. Verfahren zum polymerisieren von Harzen (1) in einer Form (2), insbesondere einer Muffel (2) zur Herstellung von zahnmedizinischen Prothesen, die Mikrowellen ausgesetzt wird, die von mindestens einem Magnetron (3) erzeugt werden und durch mindestens eine Wellenleitung (4) gelenkt werden, die in einer Antenne mit einer Abstrahlfläche (5) endet, unter Verwendung einer Muffel (2) mit massiven Wänden, die entweder aus einem Material ausgeführt sind, das von Mikrowellen durchdrungen werden kann, während die Antenne mit der Abstrahlfläche (4) an der Außenseite der Form angebracht ist, oder aus einem die Mikrowellen reflektierenden Material, während die Antenne mit der Abstrahlfläche (4) im Inneren der Form angeordnet ist, wobei das Verfahren die folgenden Schritte aufweist: man ordnet ein Wachsmodell, das auf seinen Gipsabguß (11) aufgesetzt ist, in der Muffel (2) an und legt dieses mit Hilfe einer Muffel-Füllmasse (12) fest, die von den Mikrowellen durchdrungen werden kann sowie eine gute Wärmeleitfähigkeit, Feinkörnigkeit und eine zweckmäßige mechanische Beständigkeit aufweist, man läßt die genannte Masse (12) härten, man setzt die Muffel (2) den Mikrowellen aus, man öffnet die Muffel, man leert das geschmolzene Wachs aus der Muffel-Füllmasse (12) aus, man überbrüht den Gipsabguß (11) des Modells und die Muffel-Füllmasse (12), man setzt die offene Muffel (2) den Mikrowellen aus, um ihren Inhalt zu trocknen, man läßt die Muffel abkühlen, man überzieht die Wände des mit Harz auszufüllenden Hohlraumes mit einem Material, das dieses daran hindert, am Gipsabguß (11) und an der Muffel-Füllmasse (12) anzuhaften, man füllt diesen Hohlraum mit vorbereitetem Harz (1), man schließt die Muffel, man setzt sie den Mikrowellen aus, man läßt die Muffel dann abkühlen und man formt die Prothese aus.

2. Verfahren nach Anspruch 1, dadurch gekennzeichnet, daß man entweder an der Außenseite oder an der Innenseite der Muffel (2) eine Wärmesonde (8) so anordnet, daß sie den Mikrowellen ausgesetzt ist, und daß man das Magnetron (3) mit den von der Sonde gelieferten Informationen steuert.

3. Verfahren nach Anspruch 2, dadurch gekennzeichnet, daß man die Wärmesonde (8) in eine Bezugs-Harzmasse (7) einsetzt.

4. Verfahren nach Anspruch 3, dadurch gekennzeichnet, daß man in der Muffel-Füllmasse (12) eine Aufnahme zum Aufnehmen der Wärme-Bezugs-Harzmasse (7) vorsieht, daß man diese Masse in ihrer Aufnahme zur gleichen Zeit anordnet, wenn man den genannten Hohlraum mit dem vorbereiteten Harz (1) füllt, und daß man die Wärmesonde (8) in der genannten Bezugs-Harzmasse (7) festlegt.

5. Verfahren nach irgendeinem der Ansprüche 1 bis 4, dadurch gekennzeichnet, daß man die Frequenz der Mikrowellen moduliert, um örtlich begrenzte und festgelegte Konzentrationen stationärer Wellen in der Form zu vermeiden.

6. Vorrichtung zur Durchführung des Verfahrens nach irgendeinem der Ansprüche 1 bis 5, mit mindestens einer Form oder Muffel (2), mindestens einem Magnetron (3) und mindestens einer Wellenleitung (4), die in einer Antenne mit einer Abstrahlfläche (5) endet, dadurch gekennzeichnet, daß die Form oder Muffel (2) aus vier Teilen (14, 15, 16 und 17) mit massiven Wänden gebildet ist, nämlich zwei Deckeln, einem unteren und einem oberen (14 und 17), sowie zwei aufeinandersetzbaren Hohlelementen (15 und 16), die die Seitenwände der Muffel bilden, und daß Mittel (18) zum Zusammenbau dieser vier Teile vorgesehen sind.

7. Vorrichtung nach Anspruch 6, dadurch gekennzeichnet, daß die vier Teile (14, 15, 16 und 17) scheibenförmig mit etwa gleichem Durchmesser sind, daß die die beiden aufeinandersetzbaren Elemente (15 und 16) bildenden Scheiben in ihrem mittleren Teil ausgehöhlt sind, um pyramidenstumpfförmige Aufnahmen (19' und 20') zu bilden, daß die Mittel (18) zum Zusammenbau mindestens drei Schraubenbolzen (19) bilden, deren Schaft in Öffnungen eingreift, die quer durch die Scheiben hindurch und parallel zu deren Achsen ausgespart sind sowie gegeneinander um 120° versetzt sind, daß die vier Teile aus einem Material wie Kunstharz, Keramikmaterial, hochbeständigem Glas gebildet sind, das von den Mikrowellen durchdrungen werden kann, und daß die aus den genannten vier Teilen erhaltene Muffel (2) zur Benutzung in einer Einfassung mit reflektierenden Wänden bestimmt ist, in der mindestens eine Antenne mit einer Abstrahlfläche (5) angeordnet ist.

8. Vorrichtung nach Anspruch 7, dadurch gekennzeichnet, daß sie einen Träger (35) für die Muffel aufweist, der dazu bestimmt ist, deren Metallteile von den genannten reflektierenden Wänden fernzuhalten, daß dieser Träger von einem Hohlzylinder gebildet ist, dessen Innendurchmesser ein wenig größer ist als der Durchmesser der Scheiben, und daß Mittel (36) vorgesehen sind, um die Verlagerung der Muffel im Inneren des Trägers zu begrenzen.

9. Vorrichtung nach Anspruch 6, dadurch gekennzeichnet, daß die vier Teile (14, 15. 16 und 17) aus einem die Mikrowellen reflektierenden Material bestehen, daß die Teile (14 und 17), die die Deckel bilden, eine Sirnefläche haben, die dazu bestimmt ist, der Innenseite der Muffel zugewandt zu sein, die Facetten aufweist, die so ausgerichtet sind, daß sie die Mikrowellen in alle Richtungen reflektieren, daß mindestens einer der Deckel (14, 17) mindestens eine Antenne mit einer Abstrahlfläche (5) in Höhe der Stirnfläche aufweist, die dazu bestimmt ist, der Innenseite der Muffel zugewandt zu sein, und daß die beiden aufeinandersetzbaren Teile (15 und 16) jeweils eine Höhlung (19', 20') mit glatter Innenwand aufweisen.

10. Vorrichtung nach jedem der Ansprüche 6 bis 9, dadurch gekennzeichnet, daß sie mindestens eine Wärmesonde (8) und eine Einrichtung zum Steuern des Magnetrons mit von der Sonde gelieferten Informationen aufweist, und daß die Einrichtung einen Regelungsprozessor aufweist, möglichenfalls mit einem Verstärker (44) für die Signale, die von der Sonde des Magnetrons (3) ausgesandt werden.

11. Vorrichtung nach Anspruch 10, dadurch gekennzeichnet, daß die Wärmesonde (8) im Inneren der Muffel (2) angeordnet ist, und daß eines der Teile (14, 15, 16, 17) eine Öffnung aufweist, die dazu bestimmt ist, einen Durchlaß für die Anschlüsse der Sonde herzustellen.

**Claims**

1. A method for polymerizing resins (1) in a mould (2), notably in a muffle (2) for manufacturing dental prosthesis, this mould being subjected to micro-waves generated by at least one magnetron (3) and directed by at least one waveguide (4) ending in a radiating-surface antenna (5), this process using a muffle (2) with solid walls, made either of a material the micro-waves may go through with the radiating-surface antenna (5) arranged outside the mould, or of a material reflecting the micro-waves with the radiating-surface antenna (5) arranged inside the mould, this process comprising the following steps: the wax model located on the plaster thereof (11) is placed in the muffle (2) and is secured against motion by means of a muffling mass (12) the micro-waves may go through, this mass having a good heat conductivity as well as suitable grain fineness and mechanical strength, said mass (12) is allowed to harden, the muffle (2) is subjected to the micro-waves, the muffle is opened, the muffling mass (12) is relieved from the melted wax, the model plaster (11) and the muffling mass (12) are scalded, the open muffled (2) is exposed to micro-waves to dry the content thereof, the muffle is allowed to cool, the walls of the cavity to be tamped with resin are lined with a material preventing said resin to adhere to said plater (11) and muffling mass (12), this cavity is tamped with prepared resin (1), the muffle is closed, the muffle is exposed to micro-waves, the muffle is then allowed to cool and the prosthesis is removed from the muffle.

2. A method according to claim 1, characterized in that a heat sensor (8) is arranged either outside or inside the muffle (2) in order that it is subjected to micro-waves and the magnetron (3) is controlled by the data provided by the sensor.

3. A method according to claim 2, characterized in that the heat sensor (8) is placed in a reference resin body (7).

4. A method according to claim 3, characterized in that it is provided, in the muffling mass (12), a recess for receiving the heat-reference resin body (7), this body is arranged in the recess thereof while simultaneously said cavity is filled with prepared resin (1) and the heat sensor (8) is fixed in position inside said reference resin (7).

5. A method according to any one of claims 1 to 4, characterized in that the micro-wave frequency is modulated to avoid local and fixed concentrations of stationary waves inside the mould.

6. An equipment for the working of the method according to any of claims 1 to 5, and comprising at least one mould or muffle (2), at least one magnetron (3) and at least one waveguide (4) ending with a radiating-surface antenna (5), characterized in that the mould or muffle (2) is comprised of four solid-wall parts (14, 15, 16, 17), two bottom and top covers (14, 17) and two superposable hollow elements (15, 16) comprising the muffle side walls, means (18) being provided for assembling said four parts.

7. An equipment according to claim 6, characterized in that the four parts (14, 15, 16, 17) are in the shape of disks with substantially equal diameters, those disks comprising both said superposable element (15 and 16) being hollowed in the center portion thereof to form recesses (19' and 20') in the shape of truncated pyramids, said assembly means (18) comprising at least three screwbolts (19) the shanks of which pass through holes provided through the disks in parallel relationship with the axis thereof and spaced by 120° relative to each other, said four parts being made from a material such as synthetic resin, ceramics, high-strength glass, which lets the micro-waves go through, the muffle (2) resulting from said four parts being intended to be used inside an enclosure with reflecting walls, wherein at least one said radiating-surface antenna (5) is arranged.

8. An equipment according to claim 7, characterized in that it comprises a muffle holder (35) for spacing the muffle metal parts from said reflecting surfaces, said holder being comprised of a hollow cylinder the inner diameter of which is slightly larger than the disk diameter, means (36) being provided to limit the muffle displacement inside the holder.

9. An equipment according to claim 6, characterized in that said four parts (14, 15, 16, 17) are made from a material which reflects the micro-waves, the cover-forming parts (14 and 17) having that side thereof which will face the muffle inside, provided with facets which are so directed as to reflect the micro-waves in every direction, at least one of the covers (14, 17) comprising at least one radiating-surface antenna (5) at the level with that side to be facing the muffle inside, both said superposable elements (15 and 16) each having a recess (19', 20') with a smooth inner wall.

10. An equipment according to any of claims 6 to 9, characterized in that it comprises at least one heat sensor (8) and a system for controlling said magnetron with the data provided by said sensor (8), said system comprising a magnetron-regulating processor, possibly with an amplifier (44) for the signals generated by said sensor (3).

11. An equipment according to claim 10, characterized in that, when the heat sensor (8) lies inside the muffle (2), one of the parts (14, 15, 16, 17) is provided with an opening for the passage of the connections of the sensor.

Fig.1.

Fig.2.

Fig.3.

Fig.5.

Fig.4.